**Europäisches Patentamt**

**European Patent Office**

**Office européen des brevets**

(19)

(11) Veröffentlichungsnummer: **0 443 334 A1**

## (12) EUROPÄISCHE PATENTANMELDUNG

(21) Anmeldenummer: **91100758.1**

(22) Anmeldetag: **22.01.91**

(51) Int. Cl.[5]: **G01L 1/12, G01P 15/08**

(30) Priorität: **20.02.90 DE 9001973 U**

(43) Veröffentlichungstag der Anmeldung:
**28.08.91 Patentblatt 91/35**

(84) Benannte Vertragsstaaten:
**CH DE ES FR GB IT LI NL**

(71) Anmelder: **Mannesmann Kienzle GmbH**
**Heinrich-Hertz-Strasse**
**W-7730 Villingen-Schwenningen(DE)**

(72) Erfinder: **Hilger, Gernot, Dipl.-Phys.**
**Richard-Koch Strasse 22**
**W-7218 Trossingen(DE)**
Erfinder: **Schmid, Mechtilde, Dipl.-Ing. (FH)**
**Görlitzer Strasse 105**
**W-7730 Villingen-Schwenningen(DE)**
Erfinder: **Warthold, Herbert**
**Breisacher Strasse 3**
**W-7730 Villingen-Schwenningen(DE)**

(54) **Anordnung zum Festhalten eines bandförmigen Messkörpers.**

(57) Bei Gebern zum Messen mechanischer Kräfte mittels bandförmiger Meßkörper aus amorphem, magnetoelastischem Metall stellt das Aufwickeln der Bandenden auf Wickeldorne eine kriechfeste und hochbelastbare Befestigung dar.

Um das vor dem Bilden eines Bandwickels erforderliche Fixieren eines Bandendes (14) an einem Wickeldorn (1) seriengerecht und gut reproduzierbar vornehmen zu können und dabei Knickbeanspruchungen des Bandes zu vermeiden, ist ein Sperrstift (5) vorgesehen, welcher zusammen mit einer Bandschlinge in eine in dem Wickeldorn (1) ausgebildete Aussparung eingesetzt wird.

FIG.6

EP 0 443 334 A1

Die Erfindung betrifft eine Anordnung zum Festhalten der Enden eines bandförmigen Meßkörpers aus amorphem, magnetoelastischem Metall an dem Spannen des Bandes dienenden Wickeldornen.

Derartige, im folgenden als Band bezeichnete Meßkörper finden beispielsweise in Gebern zum Messen mechanischer Kräfte Anwendung. Sie sind bekanntlich mit einer Spulenanordnung gekoppelt und stehen zwischen relativ zueinander beweglichen Bauteilen des Gebers unter einer gewissen Vorspannung.

Die hohe mechanische Belastbarkeit und Lastwechselfestigkeit, das erzielbare, vergleichsweise hohe Meßsignal, die Korrosionsbeständigkeit und die äußerst geringe Masse des eine Stärke von 20 bis 30 um aufweisenden Bandes machen derartige Geber für rauhe Betriebsbedingungen, beispielsweise für Beschleunigungsgeber in Kraftfahrzeugen, geeignet.

Erhebliche Schwierigkeiten, insbesondere was das Langzeitverhalten unter Vorspannung und Stoßbelastungen anbelangt, bereitete bisher die Befestigung der Enden des Bandes an den kraftübertragenden und relativ zueinander beweglichen Bauteilen des Gebers. Selbst bei Anwendung spezieller Laserschweißverfahren kann eine Rekristallisation und somit ein Verlust der speziellen Eigenschaften des amorphen Materials nicht verhindert werden. Einpressungen, Klebeverbindungen und Einspannungen mittels geeigneter Klemmstücke sind nicht zuletzt wegen der extrem geringen Rauhigkeit des Bandmaterials nicht ausreichend kriechfest. Punkt- bzw. linienförmige Klemmverbindungen, die eine Kerbwirkung ausüben, sind nur ungenügend stoßbelastbar.

Einen zufriedenstellenden Ansatz zur Befestigung der Enden des Bandes bietet demgegenüber der Gedanke der Bildung jeweils eines Bandwickels mit mehreren Windungen, die sich unter der Wirkung der erforderlichen Vorspannung aufeinander festziehen. Vorteilhaft ist bei dieser Lösung, daß an der außen liegenden Einlaufstelle das Band mit einem relativ großen Radius knickfrei zum Bandwickel umgelenkt wird und daß, wenn einer der beiden Wickeldorne drehbar gelagert ist, eine einfache und feinfühlige Justiermöglichkeit gegeben ist.

Um Schlupf beim Wickeln des Bandes, aber auch um ein Kriechen des gesamten Bandwickels insbesondere unter erschütterungsbeeinflußter Vorspannung zu vermeiden, ferner zu vermeiden, den Bandwickel wegen des Aufspringens des Bandes bei der Montage stets unter Vorspannung halten zu müssen und das Wickeln für die Serienmontage mit einem stets reproduzierbaren Bandwickel geeignet zu machen, ist es erforderlich, die Enden des Bandes an dem jeweiligen Wickeldorn zu fixieren. Für ein solches Fixieren oder Anheften des Bandes scheiden die geschilderten und üblichen Befestigungstechniken schon deshalb aus, weil sie zu aufwendig und zu zeitraubend sind, aber auch deshalb, weil der Übergang von der Befestigungsstelle in den Bandwickel nicht knickfrei erfolgt. Andererseits sind übliche Befestigungstechniken aus rein praktischen Gründen in der Serienfertigung an dem verhältnismäßig kleinen Wickeldorn nicht realisierbar, oder es ist die erforderliche Reproduzierbarkeit nicht gewährleistet.

Der vorliegenden Erfindung war somit die Aufgabe gestellt, unter weitgehender Vermeidung von Knickbeanspruchung eine für die Großserienfertigung geeignete Anordnung zum Befestigen eines als Meßkörper dienenden, metallischen Bandes an einem Wickeldorn zu schaffen.

Die Lösung der Aufgabe sieht vor, daß jeweils ein Sperrstift vorgesehen ist und daß am Umfang jedes Wickeldorns eine einem Sperrstift zugeordnete Aussparung derart ausgeformt ist, daß der Sperrstift zusammen mit einer Bandschlinge in die Aussparung einsetzbar ist und mit der Mantelfläche des Wickeldorns im wesentlichen abschließt.

Ein bevorzugtes Ausführungsbeispiel ist dadurch gekennzeichnet, daß zwischen einem Wickeldorn und einem Sperrstift eine Rastverbindung in Form eines der Aussparung zugeordneten Hinterschnitts ausgebildet ist und daß als Sperrstift ein im wesentlichen zylindrischer Stift Anwendung findet.

Die Erfindung bietet den Vorteil, daß trotz eines relativ breiten Toleranzfeldes, das sich infolge der zusammenwirkenden Bauteile, nämlich des Sperrstiftes, des Bandes und des Wickeldorns, ergibt, auch bei Spiel zwischen den zusammenwirkenden Bauteilen die Festhaltefunktion aufgrund des durch die Rastverbindung gegebenen Formschlusses gewährleistet ist. Die Montage ist besonders einfach und erfolgt durch Eindrücken und Einrasten des Sperrstiftes in die Aussparung des Wickeldorns, und zwar unter Zwischenlage des Bandes. Die dadurch sich ergebende, weitgehende Umschlingung des Sperrstiftes durch das Band bietet eine für die Festhaltefunktion ausreichende Reibung. Ein erst während des Wickelns des Bandes Infunktionbringen der Festhaltemittel, was eine umständliche Handhabung erfordert, ist durch die gefundene Anordnung vermieden. Die Reibung wird dadurch noch verstärkt, daß zur Bildung des Bandwickels das Band zum in die Befestigungsstelle einlaufenden Ende zurückgeschlagen und dieses zusätzlich an der Mantelfläche des Wickeldorns angedrückt wird. Dabei bietet sich ein weiterer Vorteil der gefundenen Anordnung, indem das in den Bandwickel einlaufende Ende des Bandes über den Rundungsradius des Sperrstiftes abgewinkelt, d. h. knickfrei aus der Befestigungsstelle herausgeführt wird.

Infolge der einfachen Bauformen und der leichten Montage der erfindungsgemäßen Festhaltemittel eignet sich die gefundene Lösung für eine weitgehende Miniaturisierung der betreffenden Bauteile und somit auch des Gebers, in welchem diese Bauteile Anwendung finden. Ferner eignet sich die Lösung für eine maschinelle Vormontage des Bandes an einem Wickeldorn.

Im folgenden sei die Erfindung anhand der beigefügten Zeichnungen näher erläutert. Es zeigen

FIGUR 1 einen ersten Wickeldorn, der drehbar gelagert werden soll,

FIGUR 2 einen Schnitt des Wickeldorns gemäß FIGUR 1,

FIGUR 3 einen zweiten Wickeldorn, der lageunveränderlich in einer Kulisse aufgenommen werden soll,

FIGUR 4 einen Schnitt des Wickeldorns gemäß FIGUR 3,

FIGUR 5 ein Schnittbild des Montagezustandes vor dem Verbinden des Sperrstiftes mit dem Wickeldorn,

FIGUR 6 ein Schnittbild des Montagezustandes zu Beginn des Aufwickelns des Bandes,

FIGUR 7 ein Schnittbild mit einem nicht zylindrischen Sperrstift vor dem Verbinden mit dem Wickeldorn,

FIGUR 8 ein Schnittbild eines Beschleunigungsgebers mit einem bandförmigen, amorphmetallischen Meßkörper.

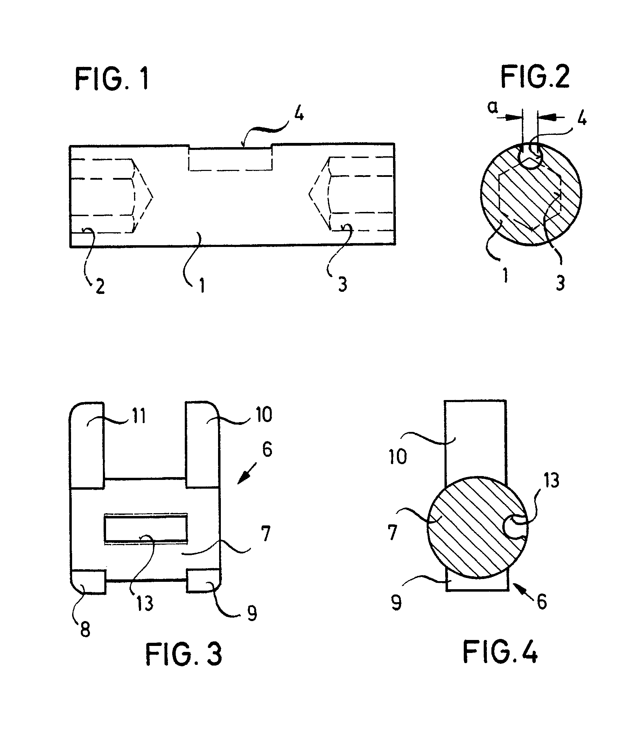

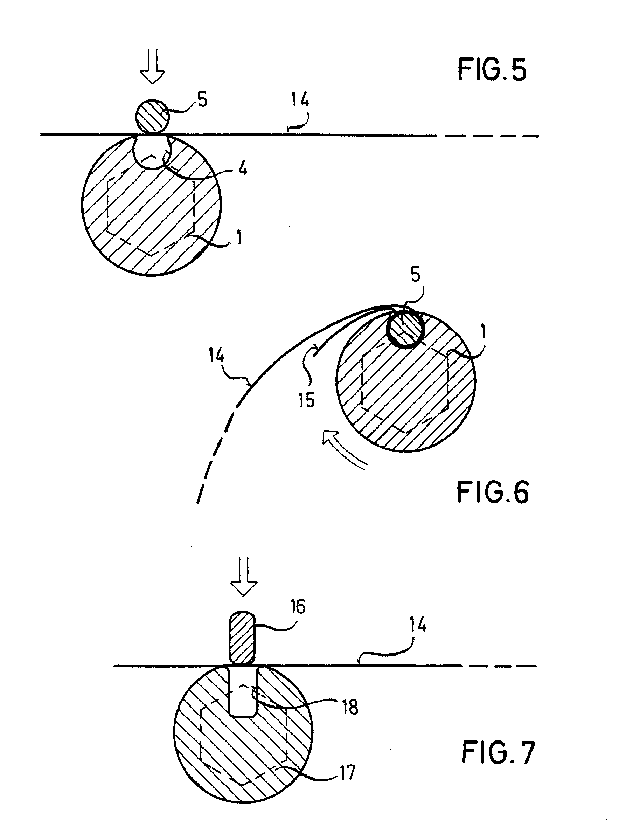

Der Wickeldorn 1 gemäß Fig. 1 ist zylindrisch ausgebildet und stirnseitig mit Sechskantsenkungen 2, 3 versehen, mittels denen der Wickeldorn 1 im eingebauten Zustand drehbar ist. Eine am Wickeldorn 1 mantelseitig ausgeformte Aussparung 4 weist einen teilzylindrischen Querschnitt auf, dessen Radius im wesentlichen dem Radius eines in die Aussparung 4 einsetzbaren Sperrstiftes 5 (FIGUR 5) entspricht. Die Aussparung 4 ist mit einem durch Zwangsentformen herstellbaren "Hinterschnitt" versehen, d. h. das Öffnungsmaß a der Aussparung 4 ist kleiner als der Durchmesser des Sperrstiftes 5. Dadurch wird eine Rastwirkung zwischen dem Wickeldorn 1 und dem Sperrstift 5 erzielt und bewirkt, daß infolge dieses Formschlusses der Sperrstift 5, auch wenn toleranzbedingtes Spiel gegeben sein sollte, nicht ohne weiteres aus der Aussparung herausgezogen werden kann, wenn das Band, was unter einem gewissen Zug erfolgt, gewickelt wird.

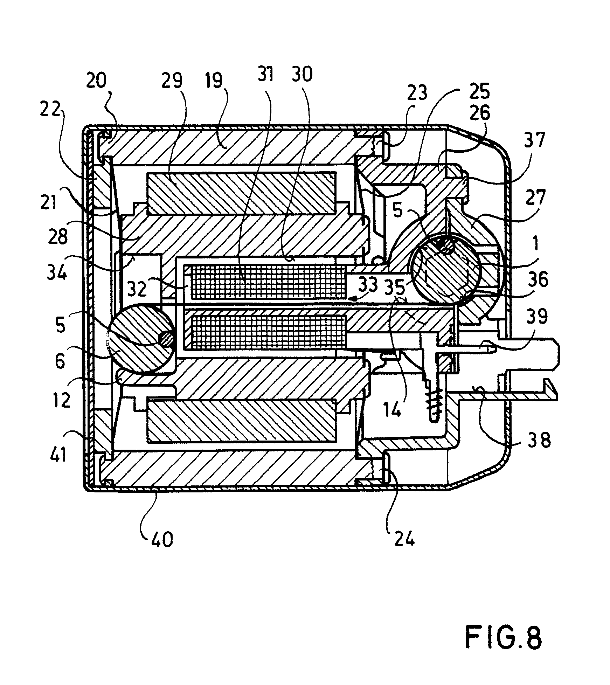

Der mit FIGUR 3 dargestellte Wickeldorn 6 weist einen zylindrischen Abschnitt 7 und Wangen bzw. Wangenteile 8, 9, 10 und 11 auf, mittels denen der Wickeldorn 6 verdrehfest in eine Fassung oder Kulisse in einem Bauteil des betreffenden Gebers einsetzbar ist, d. h. der Bandwickel muß vor dem Einsetzen des Wickeldorns 6 in diese Fassung auf dem zylindrischen Abschnitt 7 aufgewickelt sein. Vorzugsweise ist, wie aus der FIGUR 8 hervorgeht, eine in die Fassung eingreifende Zunge 12 vorgesehen, die auf den lose aufgewickelten Bandwickel einwirkt und ein Aufspringen und Lockern der Wicklung vermeidet.

In gleicher Weise wie bei dem Wickeldorn 1 ist an dem Wickeldorn 6 in dessen zylindrischem Abschnitt eine Aussparung 13 vorgesehen. Es kann somit derselbe Sperrstift 5 für beide Wickeldorne 1 und 6 verwendet werden.

Bei dem in FIGUR 5 dargestellten Montagezustand liegt das eine Ende des Bandes 14 auf dem Wickeldorn 1. Durch Eindrücken des Sperrstiftes 5 in die Aussparung 4 wird das Band 14 durch Bildung einer zwischen der Aussparung 4 und dem Sperrstift 5 liegenden und somit mit erheblicher Reibung behafteten Bandschleife befestigt.

Die Darstellung FIGUR 6 zeigt, wie beim Bilden eines Bandwickels bei einer entsprechenden Wickelrichtung bzw. Drehrichtung des Wickeldorns (Pfeil) in vorteilhafter Weise sowohl der Rundungsradius des Sperrstiftes 5 genutzt werden kann, d. h. das Band 14 knickfrei aus der Festhaltestelle herausläuft, als auch das überstehende Bandende 15 faltenfrei am Wickeldorn 1 andrückbar ist.

Mit der FIGUR 7 ist eine Ausführungsvariante dargestellt, bei der als Sperrstift ein flach profiliertes Teil 16 mit geeigneten, nicht näher bezeichneten Übergangsrundungen verwendet ist. Dementsprechend ist in dem betreffenden Wickeldorn 17 eine dem Sperrstift 16 zugeordnete Aussparung 18 ausgeformt. Diese Lösung hat den Vorteil, daß für die angestrebte Festhaltefunktion eine Rastwirkung nicht erforderlich ist. Der Nachteil ist in dem Sonderprofil des Sperrstiftes zu sehen, das kein handelsübliches Halbzeug darstellt.

Der mit dem Schnittbild FIGUR 8 dargestellte Beschleunigungsgeber, in welchem das Band Anwendung findet, weist eine Stützhülse 19 auf, an deren Stirnseiten jeweils mehrere Zapfen unmittelbar angeformt sind. Eine erste Serie von Zapfen 20 dient der Befestigung einer Membranfeder 21 und eines Bodenteils 22. Mit einer zweiten und dritten Serie von Zapfen 23 und 24 sind beispielsweise durch Ultraschallschweißen eine zweite Membranfeder 25, ein Träger 26 und eine Abdeckung 27 an der Stützhülse 19 befestigt. Mit den parallel zueinander angeordneten Membranfedern 21 und 25 ist ein Halter 28 verbunden, der der Aufnahme einer seismischen Masse 29 dient und der mit einer zentralen Freisparung 30 versehen ist, die eine koaxiale Anordnung der Feder-Masse-Baugruppe 21, 25, 28, 29 und einer dem Träger 26 zugeordneten, entsprechend der Meßwertverarbeitung aus einer oder mehreren Wicklungen bestehenden Spule 31 gestattet. Der Spulenkörper 32, der unmittelbar an dem Träger 26 angeformt ist, weist einen relativ schmalen Luftspalt 33 auf, durch welchen das Band 14 berührungsfrei hindurchgeführt ist.

In dem Halter 28 ist ferner eine Fassung 34 ausgebildet, welche der Aufnahme des Wickeldorns 6 dient und in welcher der Wickeldorn 6 unter der Wirkung der Zugspannung des Bandes 14 festgehalten wird. Für den Wickeldorn 1, der im Gegensatz zum Wickeldorn 6 drehbar gelagert sein soll, ist an dem Träger 26 eine Lagerschale 35 angeformt. Die Gegenlagerschale 36 ist in der Abdeckung 27 ausgebildet, und zwar derart, daß beim Verbinden der Abdeckung 27 mit der Stützhülse 19 und mit dem Träger 26 (Zapfen 37) der Wickeldorn 1 festgespannt wird, aber mit einem gewissen Friktionsmoment noch drehbar bleibt und somit das Band 14 gespannt werden kann. Zum Drehen des Wickeldorns 1 dienen die Sechskantsenkungen 2 bzw. 3. Nach dem Eindrehen der erforderlichen Vorspannung des Bandes 14 wird der Wickeldorn 1 fixiert, indem er mit der Lagerwand verschweißt wird. Der Vollständigkeit halber sei noch erwähnt, daß in der Abdeckung 27, wie aus der FIGUR 8 ferner ersichtlich ist, eine Steckerfassung 38 ausgeformt ist, in die Steckverbinder 39, die mit den Enden der Wicklungsdrähte kontaktiert sind, hineinragen. Ein mit 40 bezeichnetes, haubenförmiges Gehäuse dient als magnetische Abschirmung. Es ist aus einem magnetisch hochleitfähigen Werkstoff hergestellt und zusammen mit einer aus dem gleichen Material hergestellten Platte 41 mit dem Bodenteil 22 verbördelt.

Der dargestellte Beschleunigungsgeber, der einen Raumbedarf von lediglich 7 cm$^3$ aufweist, läßt sich aufgrund seiner Kleinheit an der Chassiswand eines Fahrzeuges ohne weiteres durch stirnseitiges Kleben befestigen. Besser ist jedoch ein Einsetzen in eine geeignete Fassung.

Vorzugsweise erfolgt die Montage des Bandes 14 indem zunächst das eine Bandende am Wickeldorn 6 angeheftet und durch mehrere Umschlingungen ein Bandwickel gebildet wird. Das noch freie andere Bandende wird dann in und durch den Spalt 33 geschoben und der Wickeldorn 6 in die Fassung 34 eingesetzt, wobei die Zunge 12 auf den Bandwickel einwirkt und ein Aufspringen der Wicklungen verhindert. Im folgenden wird das Band 14 an dem Wickldorn 1 befestigt, ein Bandwickel gebildet und der Wickeldorn 1 in die Lagerschale 35 im Träger 26 eingelegt. Danach wird die Abdeckung 27 angebracht und das Band 14, wie bereits beschrieben, gespannt und fixiert.

**Patentansprüche**

1. Anordnung zum Festhalten der Enden eines bandförmigen Meßkörpers aus amorphem, magnetoelastischem Metall an dem Spannen des Bandes dienenden Wickeldornen, dadurch gekennzeichnet, daß jeweils ein Sperrstift (5, 16) vorgesehen ist und daß am Umfang jedes Wickeldorns (1, 6) eine einem Sperrstift (5, 16) zugeordnete Aussparung (4, 13, 18) derart ausgeformt ist, daß der Sperrstift (5, 16) zusammen mit einer Bandschlinge in die Aussparung (4, 13, 18) einsetzbar ist und mit der Mantelfläche des Wickeldorns (1, 6) im wesentlichen abschließt.

2. Anordnung nach Anspruch 1, dadurch gekennzeichnet, daß zwischen einem Wickeldorn (1) und einem Sperrstift (5) eine Rastverbindung in Form eines der Aussparung (4, 13) zugeordneten Hinterschnitts ausgebildet ist.

3. Anordnung nach Anspruch 1, dadurch gekennzeichnet, daß als Sperrstift ein im wesentlichen zylindrischer Stift (5) Anwendung findet.

4. Anordnung nach Anspruch 1, dadurch gekennzeichnet, daß als Sperrstift ein flach profiliertes Teil (16) mit Übergangsrundungen vorgesehen ist.

5. Anordnung nach Anspruch 1, dadurch gekennzeichnet, daß ein Wickeldorn (1) im wesentlichen zylinderförmig ausgebildet ist und wenigstens an einer Stirnseite Vorkehrungen (2, 3) zum Drehen in einer Lagerung (35, 36) eines betreffenden Gebers ausgeformt sind, und daß der andere Wickeldorn (6) aus einem zylindrischen Abschnitt (7) und daran angeformten Wangen (8, 9, 10, 11) für eine lageunveränderliche Aufnahme in einer Fassung (34) des Gebers besteht.

FIG. 1

FIG.2

FIG. 3

FIG.4

FIG.5

FIG.6

FIG.7

FIG.8

Europäisches
Patentamt

**EUROPÄISCHER
RECHERCHENBERICHT**

Nummer der Anmeldung

**EP 91 10 0758**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 909 652   (MANNESMANN KIENZLE GmbH) <br> * Anspruch 1 * <br> — — — | 1,5 | G 01 L 1/12 <br> G 01 P 15/08 |
| A | DE-U-8 912 560   (MANNESMANN KIENZLE GmbH) <br> * Anspruch 1; Figuren 1,3,5 * <br> — — — | 1,5 | |
| A | NL-A-7 611 474   (L.A. VAN GASTEREN) <br> * Figur 1 * <br> — — — — — | 1,2,5 | |

| RECHERCHIERTE SACHGEBIETE (Int. Cl.5) |
|---|
| G 01 D <br> G 01 L <br> G 01 P |

Der vorliegende Recherchenbericht wurde für alle Patentansprüche erstellt

| Recherchenort | Abschlußdatum der Recherche | Prüfer |
|---|---|---|
| Den Haag | 17 April 91 | CHAPPLE I.D. |